# EUROPÄISCHE PATENTSCHRIFT

(11) **EP 3 008 370 B1**
(45) Veröffentlichungstag und Bekanntmachung des Hinweises auf die Patenterteilung: **13.03.2019**
(21) Anmeldenummer: 14731793.7
(22) Anmeldetag: 22.05.2014
(51) Int. Cl.: F16L 25/00, F16L 55/172, F16L 55/18, F16L 33/04, F16L 33/12, F16L 25/06

(54) **SPANN- ODER ROHRSCHELLE**
PIPE COLLAR OR CLAMP
COLLIER DE SERRAGE OU D'ATTACHE

(30) Priorität: 14.06.2013 CH 112013
(43) Veröffentlichungstag der Anmeldung: 20.04.2016
(73) Patentinhaber: Straub Werke AG, 7323 Wangs (CH)
(72) Erfinder: SUDAR, Damir, 7310 Bad Ragaz (CH); MANNHART, Hubert, 7320 Sargans (CH)
(74) Vertreter: Patentbüro Paul Rosenich AG
(86) Internationale Anmeldenummer: PCT/IB2014/061616
(87) Internationale Veröffentlichungsnummer: WO 2014/199253

(56) Entgegenhaltungen:
- EP-A1- 1 568 930
- GB-A- 790 625
- GB-A- 835 005
- US-A- 1 996 741
- US-A- 2 546 098
- US-A- 2 775 806
- US-A- 2 994 934

## Beschreibung

Die Erfindung betrifft eine Spann- oder Rohrschelle nach dem Oberbegriff des Anspruchs 1.

Gattungsgemässe Spann- oder Rohrschellen dienen beispielsweise dem Verbinden zweier einander zugewandten Rohrenden. Die Spann- oder Rohrschelle weist ein verformbares, wenigstens einen Längsschlitz aufweisendes Gehäuse, sowie einen Spannmechanismus zum Verspannen des Gehäuses auf, der an den am Längsschlitz einander gegenüberliegenden Bereichen des Gehäuses angreift. Die Spann- oder Rohrschelle wird im unverspannten Zustand um die zu verbindenden Rohrenden herumgelegt und anschiessend mittels des Spannmechanismus verspannt. Der Längsschlitz verläuft dabei im Wesentlichen parallel zu den Achsen der zu verbindenden Rohrenden.

Derartige Spann- oder Rohrschellen kommen auch bei einem Rohrschaden als Reparaturschelle zum Einsatz, beispielsweise wenn eine Rohrleitung in ihrem Mantelbereich beschädigt ist bzw. wurde und dann in diesem beschädigt Mantelbereich z. B. leckt bzw. undicht ist. Montierte oder in einem Untergrund verlegte Rohrleitungen sind oftmals nur beschränkt und nur umständlich zugänglich. Es ist daher wesentlich, dass die zur Anwendung kommenden Spann- oder Rohrschellen sich weit öffnen lassen, d. h. der zumindest eine Längsschlitz sich einfach vergrössern und anschliessend einfach verkleinern lässt. Desto grösser der mögliche Öffnungsbereich der Spann- oder Rohrschelle ist, desto näher kommt ein tangential zu der Rohraussenseite zu liegen kommendes Spannmittel, z. B. eine Spannschraube, an der Rohraussenseite zu liegen. Die am Längsschlitz einander gegenüberliegenden Bereiche des Gehäuses müssen daher einen minimalen Abstand zum Verbinden dieser Bereiche aufweisen.

Aus der US 6,830,268 B2 ist eine Spann- oder Rohrschelle bekannt, die ein verformbares, wenigstens einen Längsschlitz aufweisendes Gehäuse aufweist. Die am Längsschlitz einander gegenüberliegenden Bereiche des Gehäuses sind als umgebogene Laschen ausgebildet. Diese Laschen weisen beabstandet zu dem im Wesentlichen zylindrischen Abschnitt des Gehäuses diese Laschen quer durchdringende, zum freien Ende der Laschen offene Einführschlitze für Spannmittel eines Spannmechanismus auf. Das Spannmittel ist eine Spannschraube mit einer Kontermutter. Weiter umfasst der Spannmechanismus zwei quer zu dem Spannmittel und somit parallel zu der Längserstreckung der Laschen verlaufende Spannschienen, welche von dem Spannmittel durchdrungen werden und mit den einander abgewandten Aussenseiten der Laschen in Anlage bringbar sind. Durch den Abstand des Spannmittels zu dem im Wesentlichen zylindrischen Abschnitt des Gehäuses bzw. zur Rohraussenseite wird ein Freiraum geschaffen, so dass der Längsschlitz bei der Anordnung des Spannmechanismus einen grossen Öffnungsbereich aufweisen kann.

Nachteilig an der bekannten Lösung ist, dass die Anordnung des Spannmechanismus im Zustand, in welchem die Spann- oder Rohrschelle um das Rohr bzw. die Rohrleitung herumgelegt ist, schwierig ist. Die Laschen müssen einerseits mit zwei Händen zusammengedrückt und gleichzeitig muss der Spannmechanismus an den Laschen angeordnet werden. Zudem müssen die von den Laschen gebildeten Hohlräume mit einem Füllmateriel gefüllt sein, damit die Laschen insbesondere im verspannten Zustand der Spann- oder Rohrschelle eine ausreichende Steifigkeit aufweisen. Würden die Laschen bei dieser bekannten Lösung keine ausreichende Steifigkeit aufweisen, würde sich das Spannmittel des Spannmechanismus sowie die Laschen über ein zulässiges Mass verformen, da das Spannmittel neben den Zug-/Druckspannkräfte auch Kraftanteile der wirkenden Momentenkräfte aufnehmen müsste. Selbsterklärlich ist eine derartige Spann- oder Rohrschelle aufwändig und materialintensiv in der Herstellung, was sich insbesondere auf die Herstellkosten für die Spann- oder Rohrschelle nachteilig auswirkt.

Aus der EP 1 954 970 B1 ist eine Spann- oder Rohrschelle mit einem verformbarem, wenigstens einen Längsschlitz aufweisenden Gehäuse und mit einem Spannmechanismus zum Verspannen des Gehäuses bekannt.

Die am Längsschlitz einander gegenüberliegenden Bereiche des Gehäuses sind als umgebogene Laschen ausgebildet. Der Spannmechanismus umfasst einen ersten Bolzen und einen zweiten Bolzen, die jeweils in den Laschen vorgesehen sind, und zumindest ein den ersten Bolzen quer durchsetzendes Spannmittel, hier eine Spannschraube, auf, welches in bzw. an dem ersten Bolzen gehalten ist und relativ zum zweiten Bolzen verschwenkbar ist. Der zweite Bolzen weist zumindest einen Einführschlitz auf, in welchen das Spannmittel einschwenkbar ist. Anschliessend an das Einschwenken des Spannmittels kann der Spannmechanismus verspannt werden.

Diese bekannte Spann- oder Rohrschelle ist einfach in der Bedienung, aber weist einen beschränkten Öffnungsbereich für den Längsschlitz auf.

Eine weitere bekannte Spann- oder Rohrschelle ist bei US2994934A1 offenbart.

Aufgabe der vorliegenden Erfindung ist es somit, eine Spann- oder Rohrschelle zu schaffen, welche die vorgenannten Nachteile nicht aufweist und insbesondere weit geöffnet werden kann, einfach anwendbar sowie günstig zu fertigen ist.

Die Aufgabe wird durch die Merkmale des unabhängigen Anspruchs 1 gelöst. Vorteilhafte Weiterbildungen sind in den Figuren und in den abhängigen Patentansprüchen dargelegt.

Gemäss der Erfindung umfasst der Spannmechanismus weiter ein Distanzteil, das einen Anlageabschnitt, der im verspannten Zustand der Spann- oder Rohrschelle mit dem Anlagebereich des zweiten Bolzens in Anlage bringbar ist, und eine Durchführöffnung für das Spannmittel aufweist, die von dem Anlageabschnitt des Distanzteils beabstandet ist; wobei der Spannmechanismus zumindest zwei, in Richtung des Längsschlitzes nebeneinander angeordnete Spannmittel umfasst, wobei zumindest an einem der Spannmittel ein Distanzteil vorgesehen ist.

Das Distanzteil und das Spannmittel bilden somit ein hakenförmiges Element, welches bereichsweise um den zweiten Bolzen herumführbar ist. Aufgrund der zum Anlageabschnitt des Distanzteils beabstandeten Durchführöffnung für das Spannmittel liegt dieses Spannmittel auch im verspannten Zustand der Spann- oder Rohrschelle nicht in einer tangential zum im Wesentlichen zylindrischen Gehäuse bzw. zur Rohraussenseite ausgerichteten Ebene, sondern in einem Winkel dazu. Damit wird ein ausreichender Freiraum zwischen dem Spannmittel und dem Gehäuse bzw. der Rohraussenseite geschaffen, so dass die Laschen zur Anordnung des Spannmechanismus wesentlich weiter als bei der EP 1 954 970 B1 auseinander liegen können. Der dadurch grösser öffnenbare Längsschlitz vereinfacht wesentlich die Montage der erfindungsgemässen Spann- oder Rohrschelle, ohne dass die Herstellungskosten zu dieser bekannten Lösung merklich zunehmen.

Die Spannmittel übernehmen in einer solchen Ausführung jeweils einen Teil der durch den Spannmechanismus aufgebrachten Spannkräfte und können somit kleiner in den Abmessungen ausgebildet oder gar von ausreichender, jedoch geringer Materialqualität sein. Des Weiteren können die Spannmittel auch voneinander unterschiedlich verspannt werden, was z. B. beim Verbinden von Rohren mit unterschiedlichen Aussendurchmessern vorteilhaft ist. Vorteilhaft weist jedes Spannmittel jeweils ein Distanzteil auf, was eine besonders vorteilhafte Verspannung der Spann- oder Rohrschelle ermöglicht.

Das Spannmittel ist vorteilhaft eine Spannschraube mit einem Schraubenkopf als Antreibmittel für die Spannschraube. Alternativ wird als Spannmittel z. B. eine Gewindestange verwendet, welche beispielsweise zwei in einem Abstand zueinander angeordnete Mutterelemente aufweist, z. B. Kontermuttern. Dabei ist es denkbar eines dieser Mutterelemente in einem der Endbereiche der Gewindestange festzulegen, beispielsweise mittels Lot, Kleber oder zumindest eines Schweisspunktes.

Vorzugsweise ist am Distanzteil benachbart zum Anlageabschnitt des Distanzteils, an einem, der Durchführöffnung abgewandten freien Endbereich ein Hintergreifabschnitt zum bereichsweisen Hintergreifen des zweiten Bolzens im verspannten Zustand der Spann- oder Rohrschelle vorgesehen, womit ein Abrutschen des Distanzteils während des Verspannens des Spannmechanismus verhindert ist.

Bevorzugt ist der Anlagebereich des zweiten Bolzens zumindest bereichsweise abgeflacht, wodurch die Kontaktfläche mit einem Distanzteil vergrössert wird, das vorteilhaft einen ebenen Anlagebereich aufweist. Somit können z. B. Distanzteile mit einer im Wesentlichen quaderförmigen Ausgestaltung, beispielsweise aus einem Standard-Halbfabrikat verwendet werden, was günstige Herstellungskosten für das Distanzteil und somit für die Spann- oder Rohrschelle ermöglicht.

Vorzugsweise weist das Distanzteil einen ersten Schenkel und einen zweiten, gegenüber dem ersten Schenkel abgewinkelten Schenkel auf, wobei der Anlageabschnitt des Distanzteils am ersten Schenkel vorgesehen ist. Ein solches Distanzteil zeichnet sich durch eine hohe Steifigkeit auch bei geringen Materialstärken aus.

Vorteilhaft ist auch die Durchführöffnung des Distanzteils im ersten Schenkel des Distanzteils vorgesehen, so dass der zweite Schenkel über seine gesamte Längserstreckung die volle Materialstärke zur Übernahme von auftretenden Kräften aufweist.

Der zweite Schenkel ist vorteilhaft derart ausgebildet, dass dieser einen Teil der auf das Spannmittel wirkenden Kräfte, insbesondere die Kraftanteile der auf dieses wirkenden Momentenkräfte, aufnimmt. Eine solche Ausgestaltung verhindert insbesondere eine Verformung, z. B. Durchbiegung, des Spannmittels auch unter hohen Lasten bzw. Spannkräften.

Bevorzugt weist der zweite Schenkel des Distanzteils eine Längserstreckung auf, die grösser als die Summe aus dem Abstand des ersten Bolzens und des zweiten Bolzens im unverspannten Zustand der Spann- oder Rohrschelle sowie des Durchmessers eines der Bolzen ist. Dadurch ist sichergestellt, dass der zweite Schenkel des Distanzteils während des gesamten Verspannvorgangs auf dem ersten Bolzen aufliegt. Zudem kann dadurch der zweite Schenkel einen Grossteil insbesondere der auf das Spannmittel wirkenden Kraftanteile der Momentenkräfte übernehmen, so dass das Spannmittel im Wesentlichen nur Zug- bzw. Druckkräfte übernimmt, für welche das Spannmittel an sich auch ausgebildet ist.

Bevorzugt umfasst der Spannmechanismus zumindest drei, vorteilhaft in Richtung des Längsschlitzes nebeneinander angeordnete Spannmittel, wobei zumindest an eines der Spannmittel ein Distanzteil aufweist. Das Distanzteil an dem zumindest einen Spannmittel wird zum Verspannen der Spann- oder Rohrschelle über den zweiten Bolzen geführt und in einem ersten Schritt zumindest teilweise verspannt. Dann werden die übrigen Spannmittel zum Hintergreifen des zweiten Bolzens in die entsprechende Position gebracht und auch verspannt. Gegebenenfalls wird das Spannmittel mit dem Distanzteil anschliessend nochmals nachgespannt bzw. weiter verspannt. Die Spannmittel übernehmen in einer solchen Ausführung jeweils einen Teil der durch den Spannmechanismus aufgebrachten Spannkräfte und können somit kleiner in den Abmessungen ausgebildet oder gar von ausreichender, jedoch geringer Materialqualität sein. Des Weiteren können insbesondere die beiden aussenliegenden Spannmittel auch voneinander unterschiedlich verspannt werden, was z. B. beim Verbinden von Rohren mit unterschiedlichen Aussendurchmessern vorteilhaft ist. Vorteilhaft ist an dem mittleren, d. h. an dem zwischen den beiden aussenliegenden Spannmitteln angeordneten Spannmittel, ein Distanzteil vorgesehen, was ein einfaches Handling der Spann- oder Rohrschelle gewährleistet.

Alternativ sind zwei oder jedes der zumindest drei Spannmittel jeweils mit einem Distanzteil versehen.

Vorzugsweise ist zumindest ein Ausrichtelement vorgesehen, das in oder an zumindest zwei benachbart zueinander angeordneten Distanzelementen gelagert ist. Damit wird eine korrekte Ausrichtung der Distanzteile auch im unverspannten Zustand der Spann- oder Rohrschelle für eine einfache Montage derselben gewährleistet. Das zumindest eine Ausrichtelement kann als Montagehilfe, z. B. als Handgriff dienen, der das manuelle Zusammenführen der Laschen relativ zueinander und somit das Handling der Spann- oder Rohrschelle vereinfacht. Das zumindest eine Ausrichtelement ist beispielsweise in Ausnehmungen in den Distanzeilen geführt und weiter vorteilhaft drehbar gelagert. Alternativ ist das Ausrichtelement an den Distanzteilen festgelegt.

Bevorzugt ist der erste Bolzen in seiner Längserstreckung mehrteilig ausgebildet, damit lassen sich Differenzen beim Verspannen der Spann- oder Rohrschelle einfach ausgleichen. Vorteilhaft ist jedes Spannmittel in einem separaten Bolzenteil gehalten, so dass jedes Spannmittel unabhängig von dem anderen Spannmittel verschwenkbar ist. In dieser Ausführungsform sind das Handling und die Flexibilität der Spann- oder Rohrschelle zusätzlich verbessert.

Vorzugsweise ist in dem ersten Bolzen zumindest ein Gewindeabschnitt für das zumindest eine Spannmittel vorgesehen, wobei das vorteilhaft mit einem entsprechend ausgebildeten Gewindebereich versehene Spannmittel in dem Gewindeabschnitt des ersten Bolzens eingreifen kann. Dadurch erübrigt sich die Anordnung einer Kontermutter an dem Spannmittel um mit dem Spannmechanismus die Spann- oder Rohrschelle zu verspannen.

Vorteilhaft ist der erste Bolzen ein Hohlbolzen, welcher ein geringes Gewicht bei einer ausreichender Stabilität desselben aufweist. Weiter vorteilhaft ist zumindest ein Gewindeteil mit Gewindeabschnitt für das zumindest eine Spannmittel in dem Hohlbolzen angeordnet. Ein solches Gewindeteil ist beispielsweise eine Mutter, welche in dem Hohlbolzen vorzugsweise in dessen Längserstreckung, unverschieblich angeordnet ist. Beispielsweise wird die Mutter mittels einzelnen an dem Hohlbolzen entsprechend vorgesehenen Noppen, z. B. Clinchpunkten, an diesem fixiert. Alternativ wird die Mutter mittels Lot, Kleber oder zumindest einem Schweisspunkt in dem Hohlbolzen fixiert.

Alternativ sind Gewindeabschnitte zur Aufnahme des mit einem Gewinde versehenen Spannmittels in der Wandung der Durchdringungsöffung im Hohlbolzen vorgesehen.

Bevorzugt weist der Hintergreifabschnitt des Distanzteils eine geringere Materialstärke als der Anlageabschnitt des Distanzteils auf, womit der Eingriff beim Hintergreifen des zweiten Bolzens zusätzlich verbessert wird. Zudem lässt sich ein derartiger Hintergreifabschnitt besser Umformen als bei gleicher Materialstärke, was eine einfachere Herstellung eines solch ausgebildeten Distanzelementes ermöglicht.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile.

Es zeigen dabei:
- Fig. 1: eine erste Ausführungsform einer erfindungsgemässen Spann- oder Rohrschelle im unverspannten Zustand in einer Seitenansicht,
- Fig. 2: die Spann- oder Rohrschelle gemäss Figur 1 im verspannten Zustand in einer Seitenansicht,
- Fig. 3: eine zweite Ausführungsform einer erfindungsgemässen Spann- oder Rohrschelle im unverspannten Zustand in einer perspektivischen Ansicht,
- Fig. 4: eine dritte Ausführungsform einer erfindungsgemässen Spann- oder Rohrschelle im unverspannten Zustand in einer perspektivischen Ansicht,
- Fig. 5: die Spann- oder Rohrschelle gemäss Figur 4 im verspannten Zustand in einer Seitenansicht,
- Fig. 6: eine vierte Ausführungsform einer erfindungsgemässen Spann- oder Rohrschelle im unverspannten Zustand in einer Seitenansicht,
- Fig. 7: die Spann- oder Rohrschelle gemäss Figur 6 im verspannten Zustand in einer perspektivischen Ansicht,
- Fig. 8: einen Schnitt durch die Spann- oder Rohrschelle gemäss Figur 7 entlang der Linie VIII - VIII,
- Fig. 9: eine fünfte Ausführungsform einer erfindungsgemässen Spann- oder Rohrschelle im verspannten Zustand in einer perspektivischen Ansicht,
- Fig. 10: eine sechste Ausführungsform einer erfindungsgemässen Spann- oder Rohrschelle im unverspannten Zustand in einer perspektivischen Ansicht,
- Fig. 11: die Spann- oder Rohrschelle gemäss Figur 10 im verspannten Zustand in einer perspektivischen Detailansicht,
- Fig. 12: einen Schnitt durch die Spann- oder Rohrschelle gemäss Figur 11 entlang der Linie XII - XII, und
- Fig. 13: eine siebte Ausführungsform einer erfindungsgemässen Spann- oder Rohrschelle im verspannten Zustand in einer Schnittdarstellung.

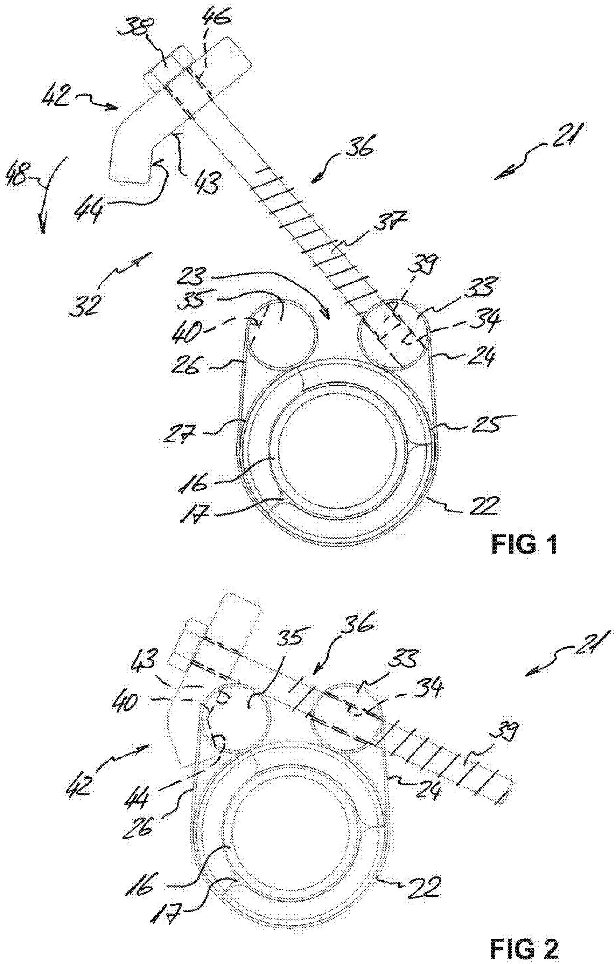

Die in den Figuren 1 und 2 gezeigte Spann- oder Rohrschelle 21 weist ein verformbares, im Wesentlichen zylinderförmiges und wenigstens einen Längsschlitz 23 aufweisendes Gehäuse 22 auf. Das Gehäuse 22 ist aus einem bandförmigen Material gefertigt, z. B. einem Stahlband. Die am Längsschlitz 23 einander gegenüberliegenden Bereiche des Gehäuses 22 sind als umgebogene Laschen 24 und 26 ausgebildet. Der jeweilige freie Endbereich 25 bzw. 27 der Laschen 24 und 26 ist in diesem Ausführungsbeispiel jeweils innenseitig des Gehäuses 22 kraft- und/oder formschlüssig festgelegt, z. B. durch Clinchungen oder mittels Schweisspunkte.

In dem Gehäuse 22 kann eine Dichteinlage 17 vorgesehen sein, welche im verspannten Zustand der Spann- oder Rohrschelle 21 dichtend an der Aussenseite des von der Spann- oder Rohrschelle 21 umgebenden Rohres 16 anliegt.

Weiter umfasst die Spann- oder Rohrschelle 21 einen Spannmechanismus 32 zum Verspannen des Gehäuses 22, der einen ersten, in der Lasche 24 vorgesehenen Bolzen 33 und einen zweiten, in der anderen Lasche 26 vorgesehenen Bolzen 35 sowie ein den ersten Bolzen 33 quer durchsetzendes Spannmittel 36 umfasst. Der erste Bolzen 33 und/oder der zweite Bolzen 35 sind als Vollbolzen ausgebildet, wobei beispielsweise ein zylinderförmiges Halbfabrikat z. B. aus Stahl verwendet wird. Alternativ sind der erste Bolzen 33 und/oder der zweite Bolzen 35 als Hohlbolzen ausgebildet.

Das Spannmittel 36 ist eine Spannschraube mit einem zumindest bereichsweise mit einem Aussengewinde versehenen Schraubenschaft 37 und mit einem Schraubenkopf 38 an einem Ende des Schafts 37. Der erste Bolzen 33 ist mit einer diesen quer durchdringenden Bohrung versehen, welche ein Innengewinde als Gewindeabschnitt 34 angeordnet ist. In der Figur 1 ist der freie, dem Schraubenkopf 38 gegenüberliegende Endbereich 39 des Schraubenschafts 37 in den Gewindeabschnitt 34 eingeschraubt, so dass das Spannmittel 36 in diesem Zustand an dem ersten Bolzen 33 gehalten ist. Das Spannmittel 36 ist relativ zum zweiten Bolzen 35 verschwenkbar.

Der Spannmechanismus 32 umfasst weiter ein Distanzteil 42, das einen ebene Abschnitte aufweisenden Anlageabschnitt 43 aufweist. Der Anlageabschnitt 43 ist im verspannten Zustand der Spann- oder Rohrschelle 21 mit einem Anlagebereich 40 des zweiten Bolzens 35 in Anlage bringbar. Weiter weist das Distanzteil 42 eine Durchführöffnung 46 für das Spannmittel 36 auf. Die Durchführöffnung 46 ist von dem Anlageabschnitt 43 des Distanzteils 42 beabstandet.

An dem Distanzteil 42 ist benachbart zum Anlageabschnitt 43 des Distanzteils 42 an einem, der Durchführöffnung 46 abgewandten freien Endbereich ein Hintergreifabschnitt 44 zum bereichsweisen Hintergreifen des zweiten Bolzens 35 im verspannten Zustand der Spann- oder Rohrschelle 21 vorgesehen.

Die Spann- oder Rohrschelle 21 wird im unverspannten Zustand um das Rohr 16 herumgelegt. Anschliessend wird das Spannmittel 36 relativ zum zweiten Bolzen 35, in Richtung des Pfeils 48, verschwenkt, so dass das Distanzteil 42 in eine den zweiten Bolzen 35 hintergreifenden Stellung kommt. Dann wird das Spannmittel 36 betätigt, wobei der freie Endbereich 39 den ersten Bolzen 33 durchdringt. Dabei kommt das Distanzteil 42 mit dem zweiten Bolzen 35 bereichsweise in Anlage und das Gehäuse 22 mit der Dichteinlage 17 wird an das Rohr 16 gepresst.

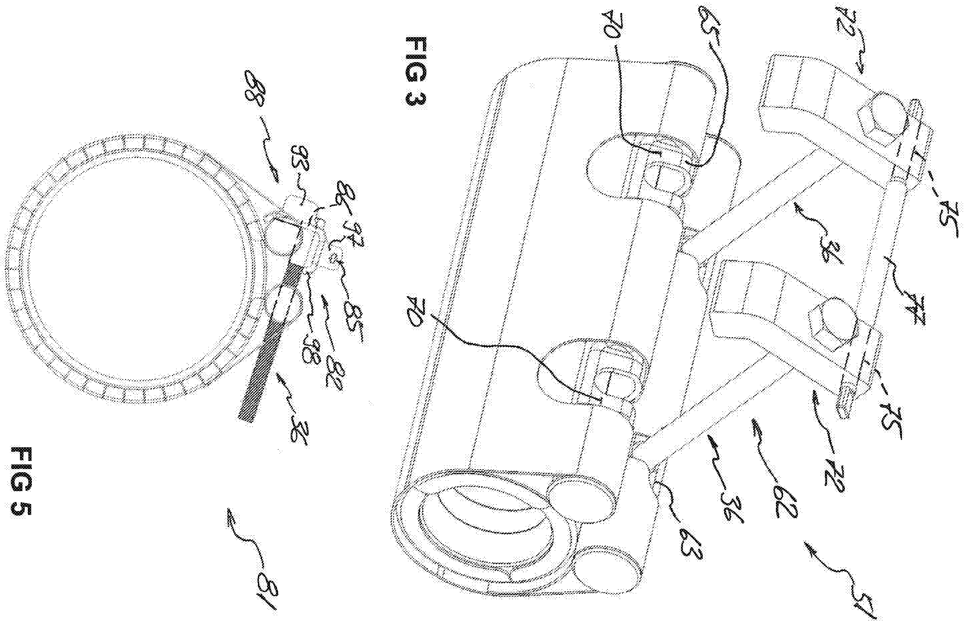

Bei der in der Figur 3 gezeigten Spann- oder Rohrschelle 51 weist der Spannmechanismus 62 zwei, nebeneinander in einem Abstand zueinander angeordnete Spannmittel 36 auf. Die Spannmittel 36 sind in einem als Hohlbolzen ausgebildeten ersten Bolzen 63 gehalten. Auch der zweite Bolzen 65 ist als Hohlbolzen ausgebildet und weist abgeflachte Anlagebereiche 70 für die Distanzteile 72 auf. Jedes Spannmittel 36 weist jeweils ein Distanzteil 72 auf, das weitgehend entsprechend dem in den Figuren 1 und 2 beschriebenen Distanzteil 42 ausgebildet ist. Die hier identisch ausgebildeten Distanzteile 72 weisen jeweils an ihrem dem Hintergreifabschnitt 74 abgewandten Endbereich eine Durchgangsöffnung 75 auf, die hier quer zu der Längserstreckung der Spannmittel 36 verläuft. In diesen Durchgangsöffnungen 75 ist ein Ausrichtelement 77 drehbar gelagert vorgesehen. Das Ausrichtelement 77 kann als Handgriff dienen, womit die Spann- oder Rohrschelle 51 leichter montierbar ist.

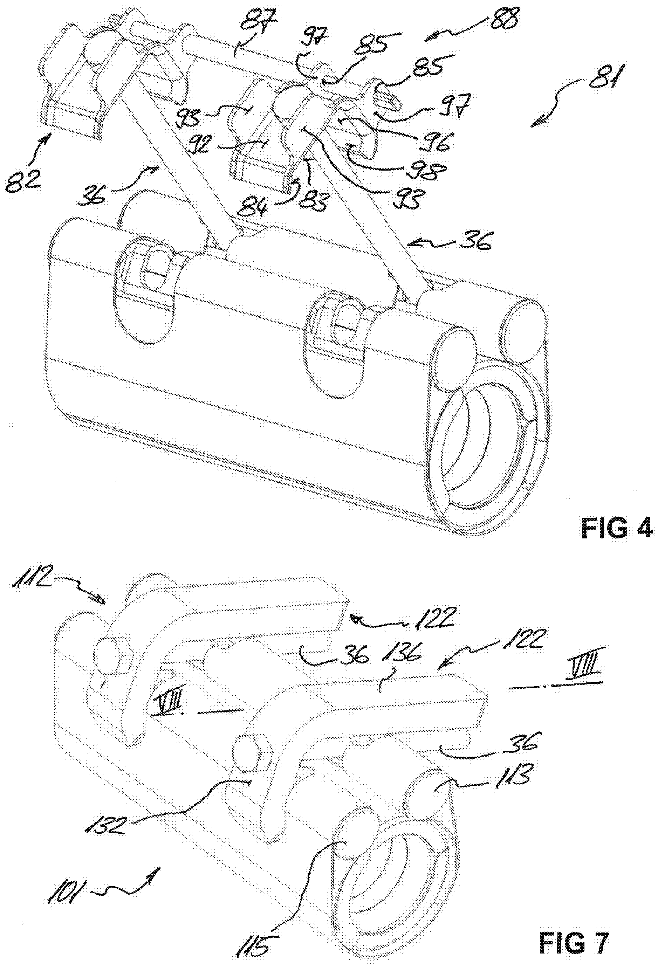

Die in den Figuren 4 und 5 dargestellte Spann- oder Rohrschelle 81 unterscheidet sich von der in der Figur 3 gezeigten Spann- oder Rohrschelle 51 einzig durch die Ausgestaltung der Distanzteile 82 des Spannmechanismus 88. Die Distanzteile 82 sind hier identisch ausgebildet und beispielsweise als Stanz-/Biegeteile aus einem Flachmaterial, vorzugsweise aus Stahl, gefertigt. Das Distanzteil 82 weist einen ersten Schenkel 92 und einen zweiten, gegenüber dem ersten Schenkel 92 in einem Winkel von etwa 90° abgewinkelten Schenkel 96 auf.

An dem ersten Schenkel 92 sind der Anlageabschnitt 83 und der Hintergreifabschnitt 84 des Distanzteils 82 vorgesehen. Auch die Durchführöffnung 86 des Distanzteils 82 für das Spannmittel 36 ist im ersten Schenkel 92 des Distanzteils 82 vorgesehen. Von der, dem Anlageabschnitt 83 des Distanzteils 82 abgewandten Seite des ersten Schenkels 92 des Distanzteils 82 ragen jeweils an den Randbereichen angeordnete erste Versteifungsrippen 93 nach aussen hin ab. An dem zweiten Schenkel 96 sind ebenfalls zwei, jeweils an den Randbereichen angeordnete zweite Versteifungsrippen 97 vorgesehen, welche ebenfalls nach aussen hin abragen. In den zweiten Versteifungsrippen 97 sind jeweils Durchgangsöffnungen 85 ist ein Ausrichtelement 87 vorgesehen. Am freien Ende des zweiten Schenkels 96 ist ein Abstützabschnitt 98 vorgesehen. Dieser Abstützabschnitt 98 kommt im verspannten Zustand der Spann- oder Rohrschelle 81 mit der Aussenseite des Spannmittels 36 bereichsweise in abstützende Anlage.

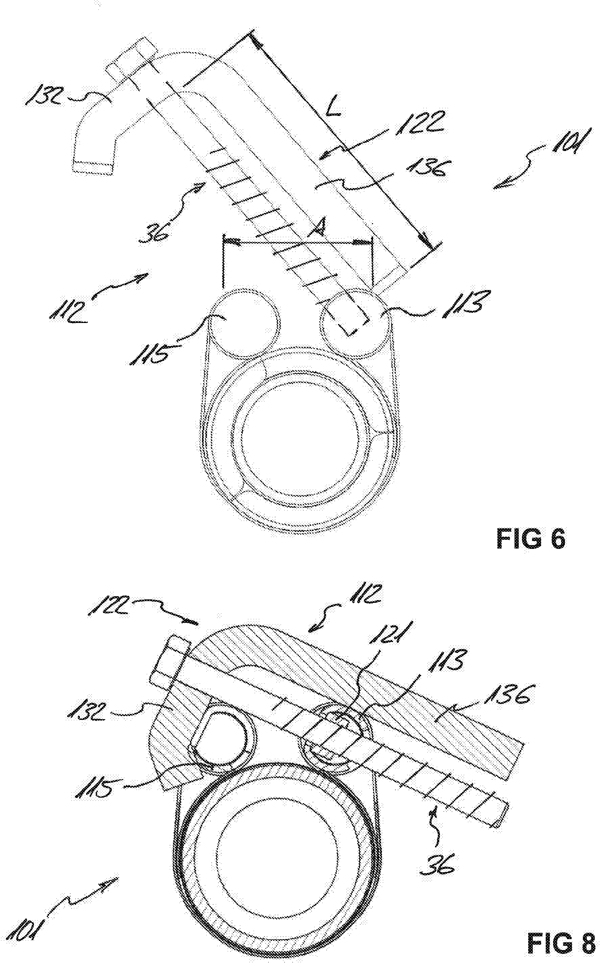

Der in den Figuren 6 bis 8 gezeigte Spannmechanismus 112 der Spann- oder Rohrschelle 101 weist einen ersten Bolzen 113 auf, der als U-förmiger Hohlbozen ausgebildet ist und in dem Muttern als Gewindeteile 121 mit Gewindeabschnitt für die Spannmittel 36 festgelegt sind. Der zweite Bolzen 115 ist hier ebenfalls als Hohlbolzen ausgebildet.

Die hier identisch ausgebildeten Distanzteile 122 der Spann- oder Rohrschelle 101 weisen wie die zuvor beschriebenen Distanzteile 82 jeweils einen ersten Schenkel 132 und einen abgewinkelten zweiten Schenkel 136 auf. Im Gegensatz zu den Distanzteile 82 sind die Distanzteile 122 wesentlich massiver ausgebildet, wodurch auf zusätzliche Versteifungsrippen verzichtet werden kann.

Der zweite Schenkel 136 weist ausgehend von der Innenseite des ersten Schenkels 132 eine Längserstreckung L auf, die grösser als die Summe A aus dem Abstand des ersten Bolzens 113 und des zweiten Bolzens 115 im unverspannten Zustand der Spann- oder Rohrschelle 101 sowie des Durchmessers eines der Bolzen 113 oder 115 ist.

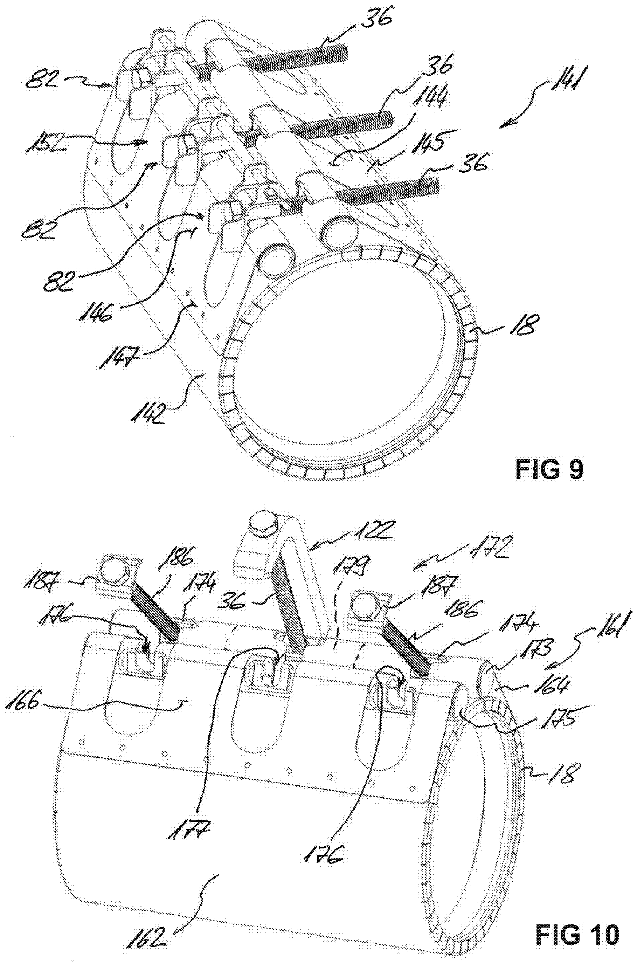

Bei der Spann- oder Rohrschelle 141 gemäss Figur 9 sind die jeweiligen freien Endbereiche 145 bzw. 147 der Laschen 144 und 146 beispielhaft jeweils aussenseitig des Gehäuses 142 kraft- und/oder formschlüssig festgelegt. An den freien, in Rohrrichtung verlaufenden Enden des Gehäuses 142 ist jeweils (in dieser Art der Darstellung nur einer ersichtlich) ein Verankerungsring 18 vorgesehen, dessen freien Kanten im unverspannten Zustand der Spann- oder Rohrschelle 141 aussenseitig in den Rohrmantel in Abhängigkeit der Materialart des Rohres 16 eindringen oder an diesem angreifen können und somit eine Verschiebung des Rohres 16 relativ zu der Spann- oder Rohrschelle 141 verhindern.

Der Spannmechanismus 152 der Spann- oder Rohrschelle 141 umfasst drei Spannmittel 36 an denen jeweils ein Distanzteil 82 vorgesehen ist. In Bezug auf die Ausgestaltung und Details der hier gezeigten Distanzteile 82 wird auf die im Zusammenhang mit den Figuren 4 und 5 gemachten Ausführungen verwiesen, welche für das hier gezeigte Distanzteil 82 jeweils auch zutreffen.

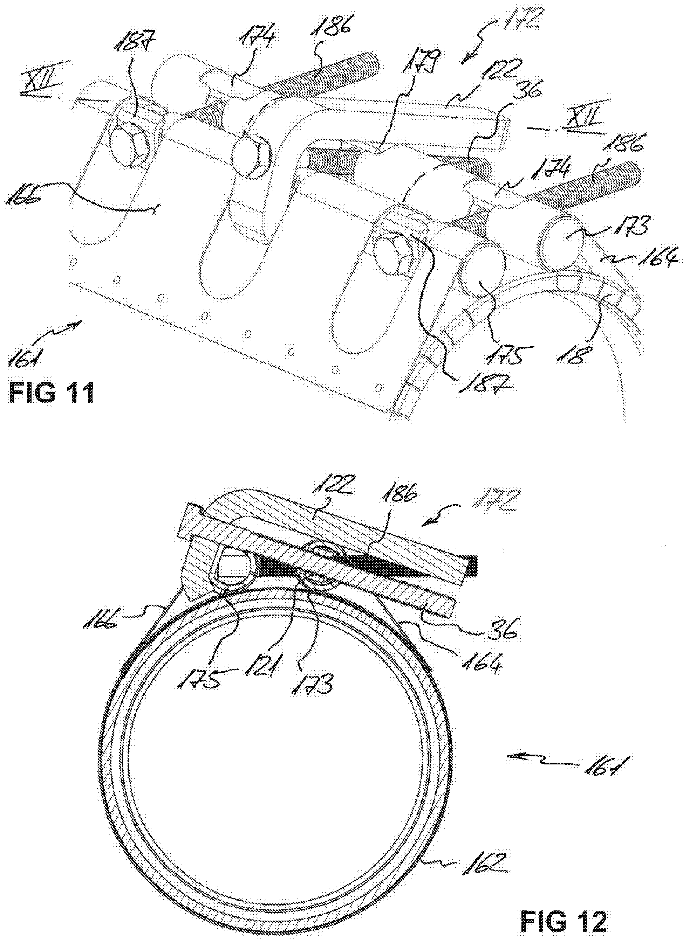

In den Figuren 10 bis 12 umfasst der Spannmechanismus 172 der Spann- oder Rohrschelle 161 drei Spannmittel 36 und 186, die nebeneinander angeordnet sind. An dem mittleren Spannmittel 36 ist ein Distanzteil 122 vorgesehen. An den aussenliegenden Spannmittel 186 ist jeweils ein Hintergreifteil 187 vorgesehen.

Der erste Bolzen 173 ist in seiner Längserstreckung mehrteilig ausgebildet, wobei das Spannmittel 36 im mittleren Bolzenteil 179 gehalten ist und die Spannmittel 186 jeweils in den äusseren Bolzenteilen 174 gehalten sind. Dadurch sind die Spannmittel 36 und 186 unabhängig voneinander relativ zum zweiten Bolzen 175 verschwenkbar sind.

Der zweite Bolzen 175 weist zwei äussere Einführschlitze 176 zur zumindest bereichsweisen Aufnahme der äusseren Spannmittel 186 und ein zwischen den äusseren Einführschlitzen 176 angeordneten weitere Einführschlitz 177 auf.

Nachdem die Spann- oder Rohrschelle 161 um ein Rohr herumgelegt ist, wird das mittlere Spannmittel 36 in Richtung des zweiten Bolzens 175 verschwenkt, bis das an diesem Spannmittel 36 angeordnete Distanzteil 122 den zweiten Bolzen 175 bereichsweise hintergreift bzw. sich in einer hintergreifenden Stellung befindet. Dann wird das mittlere Spannmittel 36 auf einen ersten Verspannungszustand verspannt.

Nun werden die anderen Spannmittel 186 - gleichzeitig oder zeitlich versetzt zueinander - in Richtung des zweiten Bolzens 175 verschwenkt, bis die an diesen Spannmitteln 186 angeordnete Hintergreifteile 187 den zweiten Bolzen 175 bereichsweise hintergreifen bzw. sich in einer hintergreifenden Stellung befindet. In dieser Stellung dringen die Spannmittel 186 mit deren Schaft in die äusseren Einführschlitze 176 des zweiten Bolzens 175 ein. Da der Abstand der Laschen 164 und 166 des Gehäuses 162 bereits reduziert wurde, behindern die nunmehr nahezu tangential zu der Rohraussenseite ausgerichteten Spannmittel 186 den weiteren Verspannvorgang nicht mehr. Nun werden alle Spannmittel 36 und 186 verspannt, bis der endgültig gewünschte Verspannungszustand erreicht ist.

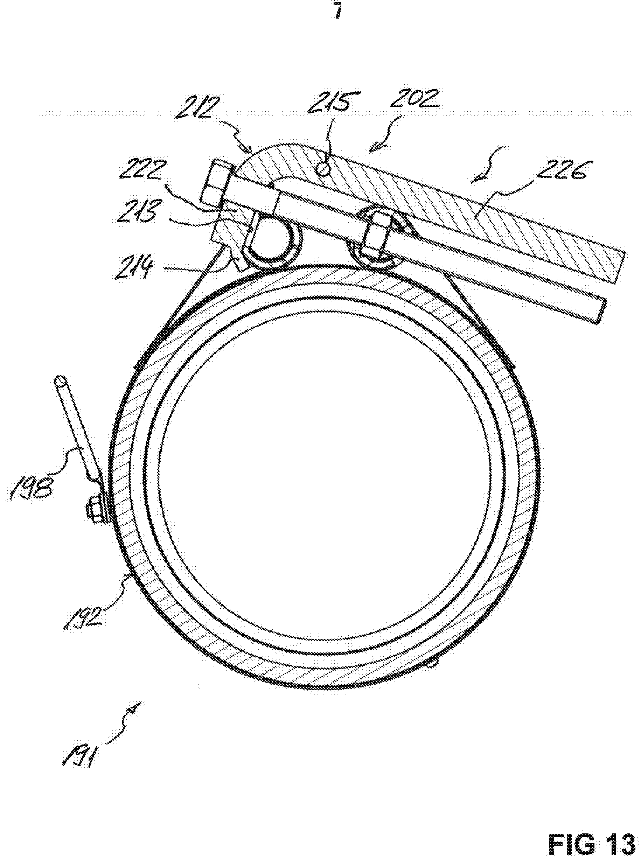

Die Spann- oder Rohrschelle 191 gemäss Figur 13 ist im Wesentlichen analog der Spann- oder Rohrschelle 101 (Figuren 6 bis 8) ausgebildet, weshalb hier nachfolgend nur noch die Unterschiede dargelegt werden. Im Gegensatz weist das Distanzteil 212 des Spannmechanismus 202 einen Hintergreifabschnitt 214 auf, der eine geringere Materialstärke als der dazu benachbarte Anlageabschnitt 213 aufweist. Der Hintergreifabschnitt 214 ist somit nasenförmig am freien Ende des Distanzteils 212 ausgebildet. Gegenüber dem Distanzteil 122 der Spann- oder Rohrschelle 101 wurde zudem die Materialstärke des ersten Schenkels 222 und des zweiten Schenkels 226 des Distanzteils 212 reduziert. Im zweiten Schenkel 226 ist eine Durchgangsöffnung 215 zur Aufnahme eines Ausrichtelementes (hier nicht dargestellt) vorgesehen.

Ein Hintergreifabschnitt mit geringerer Materialstärke kann auch bei den anderen Ausführungsformen der Erfindung vorgesehen sein.

Weiter ist an dem Gehäuse 192 ein zusätzlicher Handgriff 198 angeordnet, welcher das Handling der Spann- oder Rohrschelle 191 zusätzlich vereinfacht.

**Bezugszeichenliste**

| | | | |
|---|---|---|---|
| 16 | Rohr | 51 | Spann- oder Rohrschelle |
| 17 | Dichteinlage | | |
| 18 | Verankerungsring | 62 | Spannmechanismus |
| | | 63 | 1. Bolzen |
| 21 | Spann- oder Rohrschelle | | |
| 22 | Gehäuse | 65 | 2. Bolzen |
| 23 | Längsschlitz | | |
| 24 | Lasche | 70 | Anlagebereich v. 65 |
| 25 | freier Endbereich v. 24 | | |
| 26 | Lasche | 72 | Distanzteil |
| 27 | freier Endbereich v. 26 | | |
| | | 74 | Hintergreifabschnitt |
| 32 | Spannmechanismus | 75 | Durchgangsöffnung für 77 |
| 33 | 1. Bolzen | | |
| 34 | Gewindeabschnitt v. 33 | 77 | Ausrichtelement |
| 35 | 2. Bolzen | | |
| 36 | Spannmittel | 81 | Spann- oder Rohrschelle |
| 37 | Schraubenschaft | 82 | Distanzteil |
| 38 | Schraubenkopf | 83 | Anlageabschnitt v. 82 |
| 39 | freier Endbereich v. 37 | 84 | Hintergreifabschnitt |
| 40 | Anlagebereich v. 35 | 85 | Durchgangsöffnung in 97 |
| | | | |
| 42 | Distanzteil | 87 | Ausrichtelement |
| 43 | Anlageabschnitt v. 42 | 88 | Spannmechanismus |
| 44 | Hintergreifabschnitt | | |
| | | 92 | 1. Schenkel v. 82 |
| 46 | Durchführöffnung in 42 | 93 | Versteifungsrippe v. 92 |
| | | | |
| 48 | Pfeil | 96 | 2. Schenkel v. 82 |
| | | 97 | Versteifungsrippe v. 96 |
| | | 98 | Abstützabschnitt v. 96 |
| L | Länge v. 136 | | |
| A | Summe Öffnungsabstand | | |
| 101 | Spann- oder Rohrschelle | 172 | Spannmechanismus |
| | | 173 | 1. Bolzen |
| 112 | Spannmechanismus | 174 | äusserer Bolzenteil |
| 113 | 1. Bolzen | 175 | 2. Bolzen |
| | | 176 | äusserer Einführschlitz |
| 115 | 2. Bolzen | 177 | innerer Einführschlitz |
| | | | |
| 121 | Gewindeteil | 186 | Spannmittel |
| 122 | Distanzteil | 187 | Hintergreifteil |
| 132 | 1. Schenkel v. 122 | | |
| | | 191 | Spann- oder Rohrschelle |
| 136 | 2. Schenkel v. 122 | 192 | Gehäuse |
| | | | |
| | | 198 | Handgriff |
| 141 | Spann- oder Rohrschelle | | |
| 142 | Gehäuse | 202 | Spannmechanismus |
| | | | |
| 144 | Lasche | 212 | Distanzteil |
| 145 | freier Endbereich v. 144 | 213 | Anlageabschnitt v. 212 |
| 146 | Lasche | 214 | Hintergreifabschnitt |
| 147 | freier Endbereich v. 146 | 215 | Durchgangsöffnung |
| | | | |
| 152 | Spannmechanismus | 222 | 1. Schenkel v. 212 |
| | | | |
| | | 226 | 2. Schenkel v. 212 |
| 161 | Spann- oder Rohrschelle | | |
| 162 | Gehäuse | | |
| | | | |
| 164 | Lasche | | |
| | | | |
| 166 | Lasche | | |

## Patentansprüche

1. Spann- oder Rohrschelle mit einem verformbarem, wenigstens einen Längsschlitz (23) aufweisenden Gehäuse (22; 142; 162; 192), wobei die am Längsschlitz (23) einander gegenüberliegenden Bereiche des Gehäuses (22; 142; 162; 192) als umgebogene Laschen (24, 26; 144, 146; 164, 166) ausgebildet sind, und mit einem Spannmechanismus (32; 62; 88; 112; 172; 202) zum Verspannen des Gehäuses (22; 142; 162; 192), wobei der Spannmechanismus (32; 62; 88; 112; 172; 202) einen ersten Bolzen (33; 63; 113; 173) und einen zweiten Bolzen (35; 65; 115; 175), die jeweils in den Laschen (24, 26; 144, 146; 164, 166) vorgesehen sind, und zumindest ein den ersten Bolzen (33; 63; 113; 173) quer durchsetzendes Spannmittel (36; 186) umfasst, welches in bzw. an dem ersten Bolzen (33; 63; 113; 173) gehalten ist und relativ zum zweiten Bolzen (35; 65; 115; 175) verschwenkbar ist, wobei der Spannmechanismus (32; 62; 88; 112; 172; 202) weiter ein Distanzteil (42; 72; 82; 122; 212) umfasst, das Distanzteil einen Anlageabschnitt (43; 83; 213) aufweist, wobei der Anlageabschnitt im verspannten Zustand der Spann- oder Rohrschelle (21; 51; 101; 141; 161; 191) mit einem Anlagebereich (40; 70) des zweiten Bolzens (35; 65; 115; 175) in Anlage bringbar ist, und wobei das Distanzteil eine Durchführöffnung (46) für das Spannmittel (36) aufweist, wobei die Durchführöffnung von dem Anlageabschnitt (43; 83; 213) des Distanzteils (42; 72; 82; 122; 212) beabstandet ist, **dadurch gekennzeichnet, dass** der Spannmechanismus (62; 88; 112; 172) zumindest zwei, in Richtung des Längsschlitzes nebeneinander angeordnete Spannmittel (36; 186) umfasst, wobei zumindest an einem der Spannmittel (36) das Distanzteil (72; 82; 122) vorgesehen ist.

2. Spann- oder Rohrschelle nach Anspruch 1, **dadurch gekennzeichnet, dass** an dem Distanzteil (42; 72; 82; 122; 212) benachbart zum Anlageabschnitt (43; 83; 213) des Distanzteils (42; 72; 82; 122; 212), an einem, der Durchführöffnung (46) abgewandten freien Endbereich ein Hintergreifabschnitt (44; 74; 84; 214) zum bereichsweisen Hintergreifen des zweiten Bolzens (35; 65; 115; 175) im verspannten Zustand der Spann- oder Rohrschelle (21; 51; 101; 141; 161; 191) vorgesehen ist.

3. Spann- oder Rohrschelle nach Anspruch 1 oder 2, **dadurch gekennzeichnet, dass** der Anlagebereich (40; 70) des zweiten Bolzens (35; 65; 115; 175) zumindest bereichsweise abgeflacht ist.

4. Spann- oder Rohrschelle nach einem der Ansprüche 1 bis 3, **dadurch gekennzeichnet, dass** das Distanzteil (82; 122; 212) einen ersten Schenkel (92; 132; 222) und einen zweiten, gegenüber dem ersten Schenkel (92; 132; 222) abgewinkelten Schenkel (96; 136; 226) aufweist, wobei der Anlageabschnitt (43; 83; 213) des Distanzteils (82; 122; 212) und vorteilhaft auch die Durchführöffnung (46) des Distanzteils (82; 122; 212) im ersten Schenkel (92; 132; 222) des Distanzteils (82; 122; 212) vorgesehen sind.

5. Spann- oder Rohrschelle nach Anspruch 4, **dadurch gekennzeichnet, dass** der zweite Schenkel (136; 226) des Distanzteils eine Längserstreckung (L) aufweist, die grösser als die Summe (A) aus dem Abstand des ersten Bolzens (113) und des zweiten Bolzens (115) im unverspannten Zustand der Spann- oder Rohrschelle (101; 191) sowie des Durchmessers eines der Bolzen (113) oder (115) ist.

6. Spann- oder Rohrschelle nach einem der Ansprüche 1 bis 5, **dadurch gekennzeichnet, dass** der Spannmechanismus (88; 112; 172) zumindest drei Spannmittel (36; 186) umfasst, wobei zumindest an einem, vorteilhaft an dem mittleren, Spannmittel (36) ein Distanzteil (82; 122) vorgesehen ist.

7. Spann- oder Rohrschelle nach Anspruch 6, **dadurch gekennzeichnet, dass** zumindest ein Ausrichtelement (77; 87) vorgesehen ist, das in oder an zumindest zwei benachbart zueinander angeordneten Distanzelementen (72; 82; 212) gelagert ist.

8. Spann- oder Rohrschelle nach Anspruch 6 oder 7, **dadurch gekennzeichnet, dass** der erste Bolzen (173) in seiner Längserstreckung mehrteilig ausgebildet ist, wobei vorteilhaft jedes Spannmittel (36, 186) in einem separaten Bolzenteil (174, 179) gehalten ist.

9. Spann- oder Rohrschelle nach einem der Ansprüche 1 bis 8, **dadurch gekennzeichnet, dass** in dem ersten Bolzen (33; 63; 113; 173) zumindest ein Gewindeabschnitt (34) für das zumindest eine Spannmittel (36; 186) vorgesehen ist, wobei der erste Bolzen (63; 113; 173) vorteilhaft ein Hohlbolzen ist, in dem weiter vorteilhaft zumindest ein Gewindeteil (121) mit Gewindeabschnitt für das zumindest eine Spannmittel (36) angeordnet ist.

10. Spann- oder Rohrschelle nach Anspruch 2 bis 9, **dadurch gekennzeichnet, dass** der Hintergreifabschnitt (214) des Distanzteils (212) eine geringere Materialstärke als der Anlageabschnitt (213) des Distanzteils (212) aufweist.

## Claims

1. A tension or pipe clamp with a deformable housing (22; 142; 162; 192) having at least one longitudinal slit (23), wherein the areas of the housing (22; 142; 162; 192) lying opposite each other on the longitudinal slit (23) are designed as bent flaps (24, 26; 144, 146; 164; 166), and with a tensioning mechanism (32; 62; 88; 112; 172; 202) for tensioning the housing (22; 142; 162; 192), wherein the tensioning mechanism (32; 62; 88; 112; 172; 202) comprises a first bolt (33; 63; 113; 173) and a second bolt (35; 65; 115; 175), which each are provided in the flaps (24, 26; 144, 147; 164, 166), and at least one tensioning means (36; 186) that transversely intersects the first bolt (33; 63; 113; 173), which is held in or on the first bolt (33; 63; 113; 173) and can be pivoted relative to the second bolt (35; 65; 115; 174), wherein the tensioning mechanism (32; 62; 88; 112; 172; 202) further comprises a spacer part (42; 72; 82; 122; 212), wherein the spacer part has a support section (43; 83; 213), wherein the support section can be made to abut against a support area (40; 70) of the second bolt (35; 65; 115; 174) in the tensioned state of the tension or pipe clamp (21; 51; 101; 141; 161; 191), and wherein the spacer part has a passage opening (46) for the tensioning means (36), wherein the passage opening is spaced apart from the support section (43; 83; 213) of the spacer part (42; 72; 82; 122; 212), **characterized in that** the tensioning mechanism (62; 88; 112; 172) comprises at least two tensioning means (36; 186) arranged next to each other in the direction of the longitudinal slit, wherein the spacer part (72; 82; 122) is provided at least on one of the tensioning means (36) .

2. The tension or pipe clamp according to claim 1, **characterized in that** a rear grip section (44; 74; 84; 214) is provided on the spacer part (42; 72; 82; 122; 212) adjacent to the support section (43; 83; 213) of the spacer part (42; 72; 82; 122; 212) on a free end area facing away from the passage opening (46) for gripping behind areas of the second bolt (35; 65; 115; 175) in the tensioned state of the tension or pipe clamp (21; 51; 101; 141; 161; 191).

3. The tension or pipe clamp according to claim 1 or 2, **characterized in that** at least areas of the support area (40; 70) of the second bolt (35; 65; 115; 175) are flattened.

4. The tension or pipe clamp according to one of claims 1 to 3, **characterized in that** the spacer part (82; 122; 212) has a first leg (92; 132; 222) and a second leg (96; 136; 226) that is angled relative to the first leg (92; 132; 222), wherein the support section (43; 83; 213) of the pacer part (82; 122; 212) and advantageously also the passage opening (46) of the spacer part (82; 122; 212) are provided in the first leg (92; 132; 222) of the spacer part (82; 122; 212).

5. The tension or pipe clamp according to claim 4, **characterized in that** the second leg (136; 226) of the spacer part has a longitudinal extension (L) that is larger than the sum (A) of the distance of the first bolt (113) and second bolt (115) in the non-tensioned state of the tension or pipe clamp (101; 191), as well as of the diameter of one of the bolts (113) or (115).

6. The tension or pipe clamp according to one of claims 1 to 5, **characterized in that** the tensioning mechanism (88; 112; 172) comprises at least three tensioning means (36; 186), wherein a spacer part (82; 122) is advantageously provided on the middle tensioning means (36).

7. The tension or pipe clamp according to claim 6, **characterized in that** at least one aligning element (77; 87) is provided, which is mounted in or on at least two spacer elements (72; 82; 212) arranged adjacent to each other.

8. The tension or pipe clamp according to claim 6 or 7, **characterized in that** the first bolt (173) consists of multiple parts in its longitudinal extension, wherein each tensioning means (36, 186) is advantageously held in a separate bolt part (174, 179).

9. The tension or pipe clamp according to one of claims 1 to 8, **characterized in that** at least one threaded section (34) for the at least one tensioning means (36; 186) is provided in the first bolt (33; 63; 113; 173), wherein the first bolt (63; 113; 173) is advantageously a hollow bolt, in which at least one threaded part (121) with a threaded section for the at least one tensioning means (36) is further advantageously arranged.

10. The tension or pipe clamp according to claim 2 to 9, **characterized in that** the rear grip section (214) of the spacer part (212) has a smaller material thickness than the support section (213) of the spacer part (212).

## Revendications

1. Collier de serrage ou collier pour tuyau, pourvu d'un corps (22; 142; 162; 192) déformable, comportant au moins une fente longitudinale (23), les zones du corps (22 ; 142; 162 ; 192) mutuellement opposées sur la fente longitudinale (23) étant conçues sous la forme de pattes (24, 26; 144, 146; 164, 166) recourbées et étant pourvues d'un mécanisme de serrage (32 ; 62 ; 88 ; 112 ; 172 ; 202), destiné à contraindre le corps (22 ; 142 ; 162 ; 192), le mécanisme de serrage (32; 62; 88 ; 112 ; 172 ; 202) comprenant un premier boulon (33 ; 63 ; 113; 173) et un deuxième boulon (35 ; 65 ; 115 ; 175), qui sont prévus chacun dans les pattes (24, 26 ; 144, 146 ; 164, 166) et comprenant au moins un moyen de serrage (36 ; 186) traversant à la transversale le premier boulon (33 ; 63 ; 113 ; 173), lequel est maintenu dans ou sur le premier boulon (33 ; 63 ; 113 ; 173) et est susceptible de pivoter par rapport au deuxième boulon (35 ; 65 ; 115 ; 175), le mécanisme de serrage (32; 62; 88; 112 ; 172; 202) comportant par ailleurs une pièce d'espacement (42 ; 72 ; 82 ; 122 ; 212), la pièce d'espacement comportant un segment d'appui (43 ; 83 ; 213), en position contrainte du collier de serrage ou collier pour tuyau (21 ; 51 ; 101 ; 141; 161; 191), le segment d'appui étant susceptible d'être amené en appui avec une zone d'appui (40 ; 70) du deuxième boulon (35 ; 65 ; 115 ; 175) et la pièce d'espacement comportant un orifice de passage (46) pour le moyen de serrage (36), l'orifice de passage étant écarté du segment d'appui (43 ; 83 ; 213) de la pièce d'espacement (42 ; 72 ; 82 ; 122 ; 212), **caractérisé en ce que** le mécanisme de serrage (62; 88; 112; 172) comporte au moins deux moyens de serrage (36 ; 186) placés côte à côte dans la direction de la fente longitudinale, au moins sur l'un des moyens de serrage (36) étant prévue la pièce d'espacement (72; 82; 122).

2. Collier de serrage ou collier pour tuyau selon la revendication 1, **caractérisé en ce que** sur la pièce d'espacement (42 ; 72 ; 82 ; 122 ; 212), au voisinage du segment d'appui (43 ; 83 ; 213) de la pièce d'espacement (42 ; 72 ; 82 ; 122 ; 212), sur une zone d'extrémité opposée à l'orifice de passage (46) est prévu un segment de prise arrière (44 ; 74 ; 84 ; 214) pour accrocher par l'arrière par endroits le deuxième boulon (35 ; 65 ; 115 ; 175), en position contrainte du collier de serrage ou collier pour tuyau (21 ; 51 ; 101 ; 141 ; 161 ; 191) .

3. Collier de serrage ou collier pour tuyau selon la revendication 1 ou 2, **caractérisé en ce que** la zone d'appui (40 ; 70) du deuxième boulon (35 ; 65 ; 115 ; 175) est aplatie au moins par endroits.

4. Collier de serrage ou collier pour tuyau selon l'une quelconque des revendications 1 à 3, **caractérisé en ce que** la pièce d'espacement (82 ; 122; 212) comporte une première branche (92 ; 132 ; 222) et une deuxième branche (96 ; 136 ; 226), coudée par rapport à la première branche (92 ; 132 ; 222), le segment d'appui (43 ; 83 ; 213) de la pièce d'espacement (82 ; 122 ; 212) et avantageusement également l'orifice de passage (46) de la pièce d'espacement (82; 122 ; 212) étant prévus dans la première branche (92 ; 132 ; 222) de la pièce d'espacement (82 ; 122 ; 212).

5. Collier de serrage ou collier pour tuyau selon la revendication 4, **caractérisé en ce que** la deuxième branche (136; 226) de la pièce d'espacement présente une extension longitudinale (L) qui est supérieure à la somme (A) de l'écart entre le premier boulon (113) et le deuxième boulon (115), en position non contrainte du collier de serrage ou collier pour tuyau (101 ; 191) et du diamètre de l'un des boulons (113) ou (115).

6. Collier de serrage ou collier pour tuyau selon l'une quelconque des revendications 1 à 5, **caractérisé en ce que** le mécanisme de serrage (88 ; 112 ; 172) comprend au moins trois moyens de serrage (36; 186), au moins sur un, avantageusement le moyen de serrage (36) central étant prévue une pièce d'espacement (82 ; 122).

7. Collier de serrage ou collier pour tuyau selon la revendication 6, **caractérisé en ce qu'**il est prévu au moins un élément d'alignement (77 ; 87) qui est logé dans ou sur au moins deux éléments d'espacement (72 ; 82 ; 212) placés au voisinage l'un de l'autre.

8. Collier de serrage ou collier pour tuyau selon la revendication 6 ou 7, **caractérisé en ce que** dans son extension longitudinale, le premier boulon (173) est conçu en plusieurs parties, avantageusement chaque moyen de serrage (36, 186) étant maintenu dans une partie de boulon (174, 179) séparée.

9. Collier de serrage ou collier pour tuyau selon l'une quelconque des revendications 1 à 8, **caractérisé en ce que** dans le premier boulon (33 ; 63; 113 ; 173) est prévu au moins un tronçon fileté (34) pour l'au moins un moyen de serrage (36; 186), le premier boulon (63; 113 ; 173) étant avantageusement un boulon creux, dans lequel avantageusement en outre, est placée au moins une partie filetée (121) pourvue d'un tronçon fileté pour l'au moins un moyen de serrage (36).

10. Collier de serrage ou collier pour tuyau selon la revendication 2 à 9, **caractérisé en ce que** le segment de prise arrière (214) de la pièce d'espacement (212) présente une épaisseur de matière inférieure à celle du segment d'appui (213) de la pièce d'espacement (212).
